# EUROPÄISCHE PATENTSCHRIFT

(11) **EP 0 742 798 B1**
(45) Veröffentlichungstag und Bekanntmachung des Hinweises auf die Patenterteilung: **02.11.2000**
(21) Anmeldenummer: 95907011.1
(22) Anmeldetag: 02.02.1995
(51) Int. Cl.: C08F 4/32, C08F 4/52, C08F 110/00, C08F 10/00

(54) **VERFAHREN ZUR HERSTELLUNG VON POLYOLEFINEN**
PROCESS FOR PREPARING POLYOLEFINS
PROCEDE DE PREPARATION DE POLYOLEFINES

(30) Priorität: 04.02.1994 DE 4403523
(43) Veröffentlichungstag der Anmeldung: 20.11.1996
(73) Patentinhaber: Peroxid-Chemie GmbH & Co. KG., 82049 Pullach (DE)
(72) Erfinder: LUFT, Gerhard, D-64367 Mühltal (DE); BATARSEH, Brigitte, D-64342 Seeheim-Jugenheim (DE); DORN, Maximilian, D-82031 Grünwald (DE)
(74) Vertreter: Huber, Bernhard, Dipl.-Chem.
(86) Internationale Anmeldenummer: EP9500381
(87) Internationale Veröffentlichungsnummer: WO9521200

(56) Entgegenhaltungen:
- BE-A- 607 368
- DATABASE WPIL, Nr. 74-688 43V (39), DERWENT PUBLICATIONS LTD., London; & JP,B,49-032 671 (MITSUI PETRO CHEM.INDS.).
- H. Gerrens, Polymerisationstechnik, Ullmanns Enzyklopädie der technischen Chemie, 4. Auflage, Band 19, Seiten 107-165.
- H. Gropper, Polymerisationstechnik, Ullmanns Enzyklopädie der technischen Chemie, 4. Auflage, Band 19, Seiten 167-226.
- P. Ehrlich, G.A. Mortimer, Free Radical Polymerisation of Ethylene, Advances in Polymer Science, Band 7, Heft 3 (1970), Seite 417, Springer Verlag, Berlin.

## Beschreibung

Die Erfindung betrifft ein Verfahren zur Herstellung von Polyolefinen durch Polymerisation eines α-Olefins in Gegenwart eines Peroxid-Katalysators.

Verfahren zur Herstellung von Polyolefinen durch Polymerisation von α-Olefinen in Gegenwart eines Peroxid-Katalysators sind bekannt.

Die DE-A-3322329 beschreibt ein Verfahren zur Herstellung von Polyethylen durch Polymerisation von Ethylen und einem mischpolymerisierbaren Monomeren in Gegenwart eines Katalysators aus einem Übergangsmetallderivat und einem Organoaluminiumderivat, bei dem ein organisches Peroxid dem Polymerisationprodukt bei der Ausleitung aus der Reaktionszone zugegeben wird, um dadurch den restlichen Katalysator zu deaktivieren.

Die JP-B-79031039 beschreibt die (Co)Polymerisation aliphatischer α-Olefine unter Verwendung eines Katalysatorsystems, das aus Trialkylaluminium, einem Elektronendonator und einem Peroxid besteht.

D. Yatsu et al., American Chemic Society, Division of Polymer Chemistry, Polymer Preprints, Vol. 16, Nr. 1, April 1975, Seiten 373 bis 378 beschreiben die Copolymerisation von Ethylen und Vinylacetat in Gegenwart eines Dreikomponenten-Katalysatorsystems aus AlEt3, einer Lewis-Base und einem Peroxid.

Aus der Derwent-Zusammenfassung zur JP-B-49032671 ist eine Polymerisation von Olefin oder Diolefin in Tetrahydrofuran als Lösungsmittel unter milden Bedingungen bekannt, wobei als Katalysator ein Trialkylaluminium zusammen mit einem organischen Peroxid eingesetzt wird. Das Verfahren wird bei -50 bis 150°C durchgeführt.

In BE-A-607368 wird ein Verfahren zur Copolymerisation von Olefinen mit anderen copolymerisierbaren Verbindungen beschrieben, bei dem als Katalysator aluminiumorganische Verbindungen sowie ein Peroxid eingesetzt werden.

In beiden Literaturstellen findet sich kein Hinweis, wonach durch die Kombination der Aluminiumverbindung mit dem Peroxid der Peroxidverbrauch gesenkt und demzufolge die Polymerausbeute pro Gewichtseinheit Peroxid verbessert werden kann.

Aufgabe der vorliegenden Erfindung ist es, ein wirtschaftliches Verfahren zur Polymerisation von α-Olefinen in Gegenwart eines Peroxid-Katalysators bereitzustellen, mit dem eine Verbesserung der Polymerausbeute pro Gewichtseinheit an eingesetztem Peroxid erzielt werden kann.

Diese Aufgabe wird mit der vorliegenden Erfindung gelöst.

Gegenstand der Erfindung ist ein Verfahren zur Herstellung von Polyolefinen durch Homopolymerisation von α-Monoolefinen oder alicyclischen Monoolefinen in Masse in Gegenwart eines Peroxid-Katalysators, das dadurch gekennzeichnet ist, daß man als Katalysator ein Katalysatorsystem aus den Komponenten (A) und (B) verwendet, worin bedeuten:
(A) mindestens eine Verbindung ausgewählt aus der Gruppe der Organoaluminiumverbindungen der Formel AIR3, worin R eine Alkyl-, Alkenyl-, Aryl oder Cycloalkylgruppe darstellt; und
(B) mindestens ein organisches Peroxid.

Bevorzugte Ausführungsformen dieses Verfahrens sind Gegenstand der Ansprüche 2 bis 5.

Vorzugsweise wird die Polymerisation bei einem Druck von ≥ 50 MPa (≥ 500 bar), und insbesondere zwischen 50 und 300 MPa (500 und 3000 bar) durchgeführt.

Die Polymerisationstemperatur liegt vorzugsweise zwischen 0 und 300°C, und insbesondere zwischen 100 und 250°C.

In dem aus den Komponenten (A) und (B) bestehenden Katalysatorsystem beträgt die Menge an Komponente (A) vorzugsweise ca. 0.001 bis 100 Mol, berechnet als monomere Organoaluminiumverbindung bezogen auf 1 Million Mol des eingesetzten Monomers. Die Menge der Katalysatorkomponente (B) liegt vorzugsweise bei 0.01 bis 100 Mol pro Mol der Katalysatorkomponente (A).

Die Polymerisation kann auf einer für die Polymerisation von α-Olefinen in Gegenwart eines Katalysators, insbesondere in Gegenwart eines Peroxid-Katalysators an sich bekannte Weise erfolgen und das Polymer auf an sich bekannte Weise isoliert werden. Die Polymerisation erfolgt in Masse. Sie ist eine Homopolymerisation.

Überraschenderweise wurde gefunden, daß unter Verwendung dieses Katalysatorsystems der Peroxidverbrauch in der durch organische Peroxide initiierten Polymerisation von α-Olefinen gesenkt werden kann, d.h. die Polymerausbeute pro Gewichtseinheit Peroxid kann erheblich verbessert werden.

Das aus den Katalysatorkomponenten (A) und (B) bestehende Katalysatorsystem wird den Monomeren in Substanz oder Lösung zugeführt, wobei die Zudosierung der einzelnen Katalysatorkomponenten (A) und (B) getrennt erfolgen kann. Die Katalysatorkomponenten können dabei auf einmal in die Reaktionszone eingespeist werden, oder aber kontinuierlich in geringer Konzentration; insbesondere können die Komponenten als solche oder in Lösung zugegeben werden.

Die Reaktion kann kontinuierlich oder diskontinuierlich durchgeführt werden. Als Reaktortypen kommen die für eine derartige Polymerisation an sich bekannten Reaktortypen in Frage, wie z.B. Strömungsrohr, Rührkessel, Rührkesselkaskade und ähnliche Reaktortypen.

Das α-Olefin ist ein α-Monoolefin. Als Beispiele hierfür sind insbesondere zu nennen die aliphatischen α-Monoolefine mit 2 bis 8 Kohlenstoffatomen, wie z.B. Ethylen, Propylen, Buten, Penten oder Hexen, oder die alicyclischen Monoolefine mit 5 bis 8 Kohlenstoffatomen, wie z.B. Cyclohexen oder Cyclopenten.

In der Katalysatorkomponente (A) bedeutet der Rest R eine Alkyl-, Alkenyl-, Aryl- oder Cycloalkylgruppe mit vorzugsweise 1 bis 30 Kohlenstoffatomen, insbesondere 1 bis 14, und in erster Linie mit 1 bis 7 Kohlenstoffatomen. Typische Beispiele für die Reste R sind Alkylgruppen, z.B. Methyl-, Ethyl-, Butyl-, Hexyl-, Heptyl-, Octyl-, Dodecyl-, aber auch höhere, insbesondere lineare Alkylgruppen; Alkenylgruppen, wie z.B. Allyl; Arylgruppen, wie z.B. Phenyl oder Tolyl; Arakylgruppen, wie z.B. Benzyl; und Cycloalkylgruppen, wie z.B. Cyclohexyl.

Als typische Beispiele der Organoaluminiumverbindungen AlR3 können genannt werden Trimethyl-, Triethyl-, Tributyl-, Trihexyl-, Trioctyl-, Tridodecyl-, Triphenyl-, Tritolyl- oder Tribenzylaluminium, und gemischte Organoaluminiumverbindungen, wie beispielsweise eine Mischung aus Triethyl- und Tributylaluminium, oder aus Triethyl- und Tribenzylaluminium.

Die Verbindungen der Komponenten (A) und die Peroxide der Komponente (B) können alleine oder in Mischung von 2 oder mehreren Komponenten der gleichen Gruppe, und/oder auch als Mischung einer oder mehrerer Komponenten der gleichen Gruppe mit einer oder mehreren Komponenten der anderen Gruppe eingesetzt werden.

Als organisches Peroxid der Katalysatorkomponente (B) wird vorzugsweise ein solches verwendet, wie es zur Initiierung derartiger Polymerisationsreaktionen von α-Olefinen bekannt ist. Bevorzugt werden Diacylperoxide mit 4 bis 18 Kohlenstoffatomen und Perester mit 5 bis 15 Kohlenstoffatomen eingesetzt. Als typische Beispiele für Diacylperoxide können genannt werden Isobutyrylperoxid, Lauroylperoxid und Benzoylperoxid; als Beispiele für Perester können genannt werden tert.-Butylperpivalat, tert.-Butylperneodecanoat und tert.-Butylper-2-ethylhexanoat. Auch Peroxymonocarbonate, wie z.B. tert.-Butylperoxyethylhexylcarbonat, haben sich für das erfindungsgemäße Verfahren als gut geeignet erwiesen.

Die folgenden Beispiele sollen nun die Erfindung näher erläutern, ohne sie darauf zu beschränken. In den Beispielen werden die folgenden Abkürzungen verwendet:
TBPEH: tert.-Butylper-2-ethylhexanoat
TBPND: tert.-Butylperneodecanoat
TBPPI: tert.-Butylperpivalat
TDDA: Tridodecylaluminium
TEA: Triethylaluminium
U: Umsatz

### Beispiel 1

Die Reaktion wurde in einem kontinuierlich betriebenen Rührkesselautoklaven durchgeführt, dessen Rührer aus 2 Propellern bestand, deren Flügel gegeneinander verdreht waren. Die Beheizung erfolgte durch Induktion. Die Reaktionstemperatur wurde über ein Thermoelement verfolgt. Die Druckregelung erfolgte mittels PID-Regelung. Es wurde eine Lösung von Triethylaluminium in absolutem Heptan (4 Gew.-%) eingesetzt, und als Peroxidverbindung tert.-Butylperpivalat in absolutem Heptan (2 Gew.-%). Die Lösungen der Komponenten wurden über Spindelkolbenpumpen in das Reaktionsgefäß eindosiert. Vorher wurden alle Anlagenteile gründlich mit Argon befüllt. Das Ethylen wurde ohne Lösungsmittel über einen Gaskompressor zudosiert.

Durch die gleichzeitige Eindosierung von Ethylen und der Lösungen der Katalysatorkomponenten wurde die Reaktion gestartet. Die Massenströme der einzelnen Edukte betrugen für Ethylen 0.1413 g/s, für tert.-Butylperpivalat 4.344 x 10-5 g/s und für Triethylaluminium 2.535 x 10-5 g/s.

Es wurde bei einer Reaktionstemperatur von 155 °C, einem Reaktionsdruck von 1500 bar und mit einer mittleren Verweilzeit von 60 s gearbeitet. Die Reaktion wurde 20 min lang durchgeführt. Das Produkt der letzten 10 min wurde aufgefangen und im Vakuum getrocknet. Der Umsatz betrug 17 %. Das Polymere wies ein Zahlenmittel von 25 000 und eine mittlerer Molmasse von 36 000 g/mol auf.

### Beispiele 2 bis 9

Es wurde wie im Beispiel 1 angegeben gearbeitet, wobei Katalysatorkomponenten (A) und (B) und Polymerisationsbedingungen, wie sie in der nachstehenden Tabelle 1 angegeben sind, verwendet wurden. Die erhaltenen Ergebnisse sind ebenfalls in der Tabelle 1 angegeben.

Wenn nicht anders angegeben, wurde unter den folgenden Reaktionsbedingungen gearbeitet:

Die Peroxide wurden in einer Lösung in absolutem Heptan (2 Gew.-%) eingesetzt und dem Polymerisationsgefäß bei einer Konzentration von 50 molppm kontinuierlich zugegeben.

Die Organoaluminiumverbindungen wurden in Lösung in absolutem Heptan (4 Gew.-%) eingesetzt.

Die Angaben in Mol beziehen sich auf das eingesetzte Monomer.

Die mittlere Verweilzeit betrug 60 s.

Die erhaltenen Polymeren wurden gelpermeationschromatographisch untersucht. Als Lösungsmittel wurde Trichlorbenzol verwendet. Die Ermittlung des Zahlenmittels erfolgte über eine Eichung mit Polystyrolstandards. Die mittlere Molmasse wurde durch Lichtstreuung bestimmt.

**Tabelle 1**

| Beisp. | Monomer | Kat.-Komponente A | Kat.-Komponente B | Reaktionsbedingungen | | gebildetes Polymer |
|---|---|---|---|---|---|---|
| | (Gew.-%) | (molppm) | | T(°C) | P(bar) | U (%) |
| 2 | Ethylen (99) | TEA (25) | TBPPI | 125 | 1500 | 14 |
| 3 | Ethylen (99) | TEA (25) | TBPPI | 155 | 1500 | 19 |
| 4 | Ethylen (99) | TEA (25) | TBPPI | 185 | 1500 | 17 |
| 5 | Ethylen (99) | TEA (25) | TBPPI | 155 | 1000 | 15 |
| 6 | Ethylen (99) | TEA (25) | TBPPI | 155 | 1700 | 20 |
| 7 | Ethylen (99) | TEA (25) | TBPEH | 155 | 1500 | 20 |
| 8 | Ethylen (99) | TEA (25) | TBPND | 155 | 1500 | 22 |
| 9 | Ethylen (99) | TDDA (50) | TBPPI | 155 | 1500 | 17 |

## Patentansprüche

1. Verfahren zur Herstellung von Polyolefinen durch Homopolymerisation von α-Monoolefinen oder alicyclischen Monoolefinen mit 5 bis 8 C-Atomen in Masse in Gegenwart eines Peroxidkatalysators,
**dadurch gekennzeichnet,**
daß man als Katalysator ein Katalysatorsystem aus den Komponenten (A) und (B) verwendet, worin bedeuten:
(A) mindestens eine Verbindung ausgewählt aus der Gruppe der Organoaluminiumverbindungen der Formel AlR3, worin R eine Alkyl-, Alkenyl-, Aryl- oder Cycloalkylgruppe darstellt; und
(B) mindestens ein organisches Peroxid.

2. Verfahren nach Anspruch 1,
**dadurch gekennzeichnet,**
daß das α-Monoolefin ausgewählt ist aus der Gruppe aliphatischer α-Monoolefine mit 2 bis 8 Kohlenstoffatomen.

3. Verfahren nach Anspruch 1 oder 2,
**dadurch gekennzeichnet,**
daß man die Polymerisation bei einem Druck von ≥ 50 MPa (≥ 500 bar) und einer Temperatur zwischen 0 und 300 °C durchführt.

4. Verfahren nach einem der vorhergehenden Ansprüche,
**dadurch gekennzeichnet,**
daß die Menge der Komponenten (B) 0,01 bis 100 Mol pro Mol der Komponente (A) beträgt.

5. Verfahren nach einem der Ansprüche 1 bis 4,
**dadurch gekennzeichnet,**
daß die Menge der Komponente (A) im Katalysatorsystem 0,001 bis 100 Mol, berechnet als monomere Organoaluminiumverbindung pro Million Mol des Monoolefins, beträgt.

## Claims

1. Process for the production of polyolefins by mass homopolymerization of α-monoolefins or alicyclic monoolefins containing 5 to 8 C atoms in the presence of a peroxide catalyst,
**wherein**
a catalyst system composed of the components (A) and (B) is used as the catalyst in which:
(A) denotes at least one compound selected from the group of organoaluminium compounds of the formula AlR3 in which R represents an alkyl, alkenyl, aryl or cycloalkyl group; and
(B) denotes at least one organic peroxide.

2. Process as claimed in claim 1,
**wherein**
the α-monoolefin is selected from the group of aliphatic monoolefins containing 2 to 8 carbon atoms.

3. Process as claimed in claim 1 or 2,
**wherein**
the polymerization is carried out at a pressure of ≥ 50 MPa (≥ 500 bar) and at a temperature between 0 and 300°C.

4. Process as claimed in one of the previous claims,
**wherein**
the amount of component (B) is 0.01 to 100 moles per mole of component (A).

5. Process as claimed in one of the claims 1 to 4,
**wherein**
the amount of component (A) in the catalyst system is 0.001 to 100 moles calculated as monomeric organoaluminium compound per million mole of the monoolefin.

## Revendications

1. Procédé pour la préparation de polyoléfines par homopolymérisation d'α-monooléfines ou de monooléfines alicycliques avec 5 jusqu'à 8 atomes C en masse en présence d'un catalyseur de peroxyde,
caractérisé en ce que,
en tant que catalyseur, on utilise un système de catalyseur à partir des composants (A) et (B), dans lequel :
(A) au moins un composé choisi dans le groupe des composés organoaluminium de la formule AlR3, où R représente un groupe alkyle, alcényle, aryle ou cycloalkyle ; et
(B) au moins un peroxyde organique.

2. Procédé selon la revendication 1,
caractérisé en ce que,
l'α-monooléfine est choisi dans le groupe des α-monooléfines aliphatiques avec 2 jusqu'à 8 atomes de carbone.

3. Procédé selon la revendication 1 ou 2,
caractérisé en ce que,
l'on effectue la polymérisation à une pression de ≥ 50 MPa (≥ 500 bars) à une température entre 0 et 300°C.

4. Procédé selon l'une des revendications précédentes,
caractérisé en ce que,
la quantité des composants (B) est de 0,01 jusqu'à 100 moles par mole de composant (A).

5. Procédé selon l'une des revendications 1 à 4,
caractérisé en ce que,
la quantité des composants (A) dans le système catalyseur est de 0,001 jusqu'à 100 moles, calculés comme composé organoaluminium monomère par million de moles de la monooléfine.
